# EUROPEAN PATENT APPLICATION

(11) **EP 4 838 974 A1**
(43) Date of publication of application: **11.11.2026**
(21) Application number: 25896372.7
(22) Date of filing: 23.09.2025
(51) Int. Cl.: H04W 68/00

(54) **PAGING METHOD AND APPARATUS**

(30) Priority: 14.03.2025 CN 202510308998
(71) Applicant: China Satellite Network Innovation Co., Ltd, Beijing 100029 (CN)
(72) Inventor: MEI, Chengli, Beijing 100029 (CN); MANG, Ge, Beijing 100029 (CN); YAO, Dingyi, Beijing 100029 (CN); SUN, Yuexin, Beijing 100029 (CN); ZHOU, Changsheng, Beijing 100029 (CN)
(74) Representative: Forresters IP LLP
(86) International application number: PCT/CN2025/123350
(87) International publication number: WO 2026/188771

(57) **Abstract**

Embodiments of the present disclosure provide a paging method, which is applied to a core network and includes: determining a paging area according to location information reported by a target user equipment; determining a target base station serving the paging area; and sending a paging message to the target base station, so as to page the target user equipment through the target base station. By means of the present disclosure, the problem that it is impossible to page a target user equipment in a non-terrestrial network due to the movement of a base station is solved, and the effect of accurately paging the target user equipment in the non-terrestrial network is achieved.

## Description

### Cross-Reference to Related Application

The present disclosure claims the priority of Chinese Patent Application 202510308998.X, filed in the China Patent Office on March 14, 2025, and entitled "Paging Method and Apparatus", the entire contents of which are incorporated in the present disclosure by reference.

### Technical Field

Embodiments of the present disclosure relate to the field of communications, and in particular, to a paging method and apparatus.

### Background

A base station of a non-terrestrial network is deployed on a mobile platform in the air, for example, the base station is deployed on a satellite or an airship. The base station deployed on the satellite may be referred to as a base station on a satellite. The base station in the non-terrestrial network moves at a high speed and thus cannot be bound to a geographical position on the ground, resulting in frequent changes in a tracking area identity (TAI) to which a user equipment belongs, therefore the user equipment frequently triggers a tracking area update (TAU) process, and moreover, a large number of user equipments may simultaneously trigger the TAU process in batches, resulting in a signaling storm. In addition, a user equipment (UE) registers with a certain base station, and after a period of duration (e.g., a few minutes), the base station has flown away from a serving ground area, resulting in the problem that it is impossible to page the user equipment.

In view of the above problem, there is no effective solution at present.

### Summary

Embodiments of the present disclosure provide a paging method and apparatus, so as to at least solve the problem that it is impossible to page a target user equipment due to the movement of a base station in a non-terrestrial network.

According to an embodiment of the present disclosure, a paging method is provided, which is applied to a core network and includes: determining a paging area according to location information reported by a target user equipment; determining a target base station serving the paging area; and sending a paging message to the target base station, so as to page the target user equipment through the target base station.

In an exemplary embodiment, the paging message carries a tracking area identity list, the tracking area identity list includes at least one beam position code, and the target base station is configured to page a user equipment in a beam position corresponding to each of the at least one beam position code.

In an exemplary embodiment, the tracking area identity list includes at least one third tracking area code, and the at least one third tracking area code corresponds to the at least one beam position code.

In an exemplary embodiment, the paging message further carries at least one of the following: an identity of the target user equipment, and at least one paging cycle.

In an exemplary embodiment, determining the paging area according to the location information reported by the target user equipment includes: determining the paging area according to the location information and a registration update threshold.

In an exemplary embodiment, determining the paging area according to the location information and the registration update threshold includes: determining an area, of which the location information is used as a circle center and the registration update threshold is used as a radius, to be the paging area.

In an exemplary embodiment, determining the target base station serving the paging area includes: determining the target base station according to a beam position mapping table, wherein the beam position mapping table records beam position codes of beam position which base stations serve at different moments.

According to another embodiment of the present disclosure, a paging method is provided, which is applied to a target base station and includes: receiving a paging message from a core network; acquiring at least one beam position code from the paging message to obtain a beam position code list, wherein the beam position code list includes a target beam position code, and the target beam position code is a beam position code of a beam position where a target user equipment is located; and paging a user equipment in a beam position corresponding to each of the at least one beam position code in the beam position code list, wherein the target base station is a base station serving a paging area, and the paging area is an area determined by the core network according to location information reported by the target user equipment.

In an exemplary embodiment, paging the user equipment in the beam position corresponding to each of the at least one beam position code in the beam position code list includes: paging the user equipment in the beam position corresponding to each of the beam position code in the beam position code list according to at least one paging cycle, wherein the paging message further carries the at least one paging cycle.

According to another embodiment of the present disclosure, a paging system is provided, includes: a core network, configured to determine a paging area according to location information reported by a target user equipment, determine a target base station serving the paging area, and send a paging message to the target base station; and the target base station, configured to acquire at least one beam position code from the paging message to obtain a beam position code list, wherein the beam position code list includes a target beam position code, and the target beam position code is a beam position code of a beam position where the target user equipment is located; and page a user equipment in a beam position corresponding to each of the at least one beam position code in the beam position code list.

According to yet another embodiment of the present disclosure, a computer-readable storage medium is further provided, wherein a computer program is stored in the computer-readable storage medium, and the computer program, when executed by a processor, implements the steps of the method in any of the above items.

According to yet another embodiment of the present disclosure, an electronic device is further provided, including a memory and a processor, wherein a computer program is stored in the memory, and the processor is configured to run the computer program to execute the steps in any of the above method embodiments.

According to yet another embodiment of the present disclosure, a computer program product is further provided, including a computer program, wherein the computer program, when executed by a processor, implements the steps of the method in any of the above items.

According to yet another embodiment of the present disclosure, a computer program product is further provided, including a computer instruction, wherein the computer instruction, when executed by a processor, implements the steps of the method in any of the above items.

By means of the present disclosure, the core network determines the paging area according to the location information reported by the target user equipment, determines the target base station serving the paging area, and sends the paging message to the target base station, so as to page the target user equipment by means of the target base station.

Since the core network may initiate paging to the target base station serving the target user equipment on the basis of the position of the target user equipment, the paging of the target user equipment is realized. The problem of it being impossible to page the target user equipment in a non-terrestrial network due to the movement of a base station can be solved, and the effect of accurately paging the target user equipment in the non-terrestrial network is achieved.

### Brief Description of the Drawings

Fig. 1 is a schematic diagram of a non-terrestrial network according to an embodiment of the present disclosure;
Fig. 2 is a diagram of a TAI mode of binding a base station to a geographical position;
Fig. 3 is a registration flowchart;
Fig. 4 is a paging flowchart;
Fig. 5 is a schematic diagram of updating a tracking area;
Fig. 6 is a flowchart of a paging method according to an embodiment of the present disclosure;
Fig. 7 is a schematic diagram of a first tracking area code according to an embodiment of the present disclosure;
Fig. 8 is a diagram of a longitude and latitude encoding example according to an embodiment of the present disclosure;
Fig. 9 is a schematic diagram of a tracking area identity (TAI) according to an embodiment of the present disclosure;
Fig. 10 is a schematic diagram of a format of a tracking area identity list (TAI list); and
Fig. 11 is a flowchart of paging of a network side according to an embodiment of the present disclosure.

### Detailed Description of the Embodiments

Embodiments of the present disclosure will be described in detail below with reference to the drawings and in conjunction with the embodiments.

It should be noted that, the terms "first", "second" and the like in the description, claims and the above drawings of the present disclosure are used for distinguishing similar objects, and are not necessarily used for describing a specific sequence or precedence order.

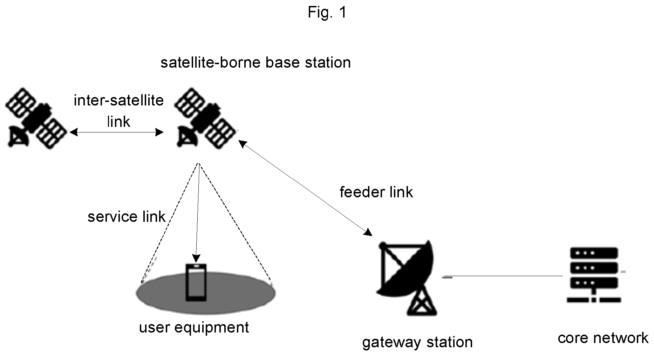

As shown in Fig. 1, it is a schematic diagram of a non-terrestrial network, a service link is a radio link between a user equipment and a base station on a satellite (a base station deployed on a satellite), a feed link is a radio link between a base station on a satellite and a gateway station, and an inter-satellite link is a radio link between base station on a satellites. The base station on a satellite provides a connection function between the service link and the feed link.

The maximum difference between the non-terrestrial network and a terrestrial network is that the base station deployed on the satellite moves at a high speed in addition to the movement of the user equipment. The high-speed movement of the satellite results in continuous changes among a relationship between the satellite and the user equipment, a relationship between the satellite and the gateway station, and a relationship between the satellite and a core network, therefore the non-terrestrial network is a network of a high-dynamic network topology structure.

There are various solutions for implementing a satellite Internet technology, and the solutions are divided into a transparent mode and a regenerative mode according to satellite loads. The former mainly implements conversion of radio frequency information by means of a satellite, and the latter implements satellite-borne deployment of some base stations or all base stations of a satellite, and may even include satellite-borne deployment of a core network element. The regenerative mode has the characteristics of high service processing capability, low latency and flexible networking.

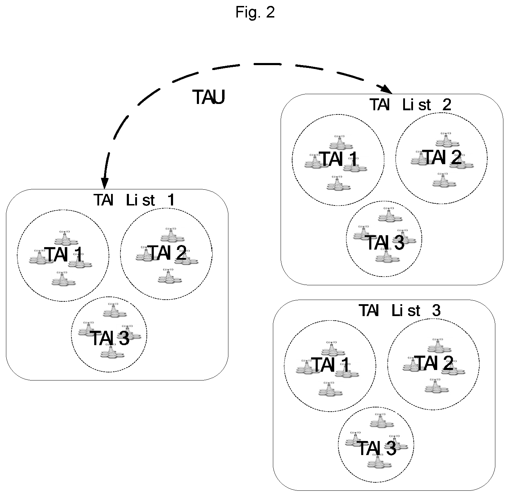

A paging process is a process in which a network searches for a user equipment. Generally, when the user equipment initially registers with the network, the position where the user equipment is located is reported in general, so as to facilitate subsequent service paging of the network. Or, after the user equipment moves and exceeds a certain area, the user equipment notifies the network of the latest position thereof. Or, after the user equipment registers for a certain period of time, the user equipment performs registration update at the expiration of a time threshold, to notify the network of the latest position thereof. A traditional position registration solution employs a TAI-based TAU solution. That is, a base station is bound to a geographical position, and as shown in Fig. 2, a group of base stations corresponds to TAIs. A plurality of TAIs constitute a tracking area identity list (TAI List). The network pages the user equipment, and in an area corresponding to the TAI Iist, paging is performed in units of base stations.

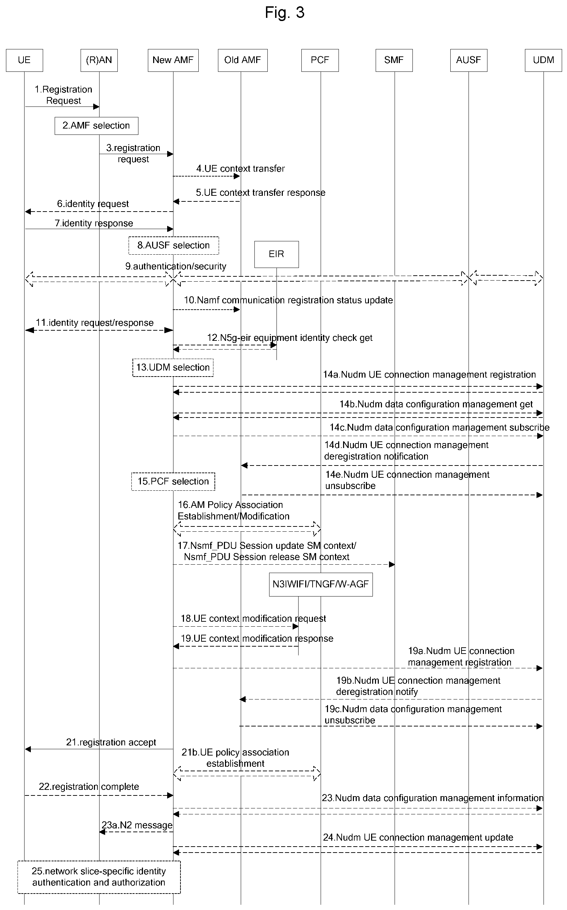

Fig. 3 is a registration flowchart, including the following steps:
1. registration request: a user equipment (UE) initiates a registration request to a radio access network (RAN);
2. access and mobility management function (AMF) selection: the RAN selects an appropriate AMF;
3. registration request: the RAN initiates a registration request to a New AMF;
4. user equipment context transfer: the New AMF initiates a user equipment context transfer request to an Old AMF;
5. user equipment context transfer response: the Old AMF initiates a user equipment context transfer request response to the New AMF;
6. identity request: the New AMF initiates an identity request to the UE to verify the identity of the user equipment;
7. identity response: the UE initiates an identity request response to the new AMF;
8. authentication server function (AUSF) selection: select an AUSF;
9. authentication/security: the New AMF authenticates the security;
10. Namf communication registration state update: the New AMF initiates Namf communication registration state update to the Old AMF;
11. identity request/response: the New AMF transmits a response of the identity request to the UE;
12. N5g-eir equipment identity check get: the New AMF initiates an N5g-eir equipment identity check get request to an equipment identity register (EIR);
13. unified data management (UDM) selection: select appropriate UDM;
14. the AMF interacts with the UDM;
14a. network unified data management (Nudm) user equipment connection management registration: the New AMF interacts a Nudm user equipment connection management registration task with the UDM;
14b. Nudm data configuration management get: the New AMF interacts a Nudm data configuration management acquisition task with the UDM;
14c. Nudm data configuration management subscribe: the New AMF initiates a Nudm data configuration management subscription request to the UDM;
14d. Nudm user equipment connection management deregistration notification: the UDM initiates a Nudm user equipment connection management deregistration notification to the Old AMF;
14e. Nudm user equipment connection management unsubscribe: the Old AMF replies Nudm data configuration management subscription cancellation to the UDM;
15. policy control function (PCF) selection: select an appropriate PCF;
16. access and mobility management (AM) Association Establishment/Modification: the New AMF interacts an AM policy association establishment/modification task with the PCF;
17. a data transmission session between the AMF and a session management function (SMF) is referred to as a Nsmf_PDU Session. The New AMF initiates a Nsmf protocol data unit session (PDU) update/release SM context request to the SMF;
18. user equipment context modification request: the New AMF initiates a user equipment context modification request to a non-3GPP interworking function (N3IWF)/trusted non-3GPP gateway function (TNGF)/wireline-access gateway function (W-AGF);
19. user equipment context modification response: the non-3GPP interworking function (N3IWF)/trusted non-3GPP gateway function (TNGF)/wireline-access gateway function (W-AGF) initiates a user equipment context modification response to the New AMF;
19a. Nudm user equipment connection management registration: the New AMF initiates a Nudm user equipment connection management registration request to the UDM;
19b. Nudm user equipment connection management deregistration notification: the UDM initiates a Nudm user equipment connection management deregistration notification to the Old AMF;
19c. Nudm data configuration management unsubscribe: the Old AMF initiates a Nudm data configuration management unsubscribe request to the UDM;
21. registration acceptance: the New AMF replies registration acceptance to the UE;
21b. user equipment policy association establishment: the New AMF establishes a user equipment policy association with the PCF;
22. registration completion: the UE replies registration completion to the New AMF;
23. Nudm data configuration management information: the New AMF interacts Nudm data configuration management information with the UDM;
23a. N2 message: the New AMF sends N2 message to the RAN;
24. Nudm user equipment connection management update: the New AMF interacts Nudm user equipment connection management update with the UDM; and
25. network slice-specific authentication and authorization: the UE, the RAN and the New AMF perform network slice-specific authentication and authorization.

In a registration process, the user equipment initiates a registration request, and the radio access network (RAN) selects an appropriate access and mobility management function (AMF) to initiate a registration request. Through authentication server function (AUSF) selection, an authentication process, a security process, and the like, the UE registers with a unified data management function (UDM) to complete the registration request.

When the movement of the UE or other situations lead to a change in a TAI List on which the user equipment camps, the user equipment initiates a TAI List update process to trigger a TAU process.

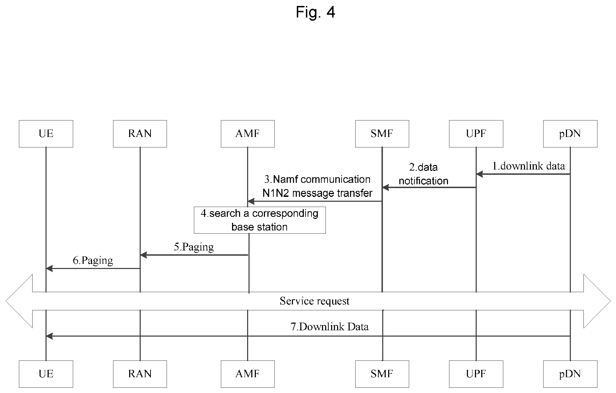

After the registration of the UE, when the UE is in a CM-IDLE state and there is data or signaling at a network side to be sent to the UE, a paging process is triggered. When the UE is in a CM-CONNECT state, some specified the protocol data unit(PDU) sessions of data transmission unit may also be activated by the paging process to establish a user equipment plane connection for data transmission. A general process of paging a UE is shown in Fig. 4, and mainly includes the following steps:
1. a packet data network (PDN) sends downlink data to a UPF;
2. the UPF sends a data notification to an SMF;
3. the SMF sends Namf communication N1N2 message transfer to the AMF;
4. the AMF searches for a corresponding base station;
5. the AMF sends a paging message to a radio access network (RAN); and
6. the RAN sends the paging message to the UE.

When there is downlink data or signaling at the network side, the AMF of a core network searches for a corresponding base station according to a tracking area identity (TAI) previously registered by a user, and sends a paging message. The base station sends the paging message to find the user.

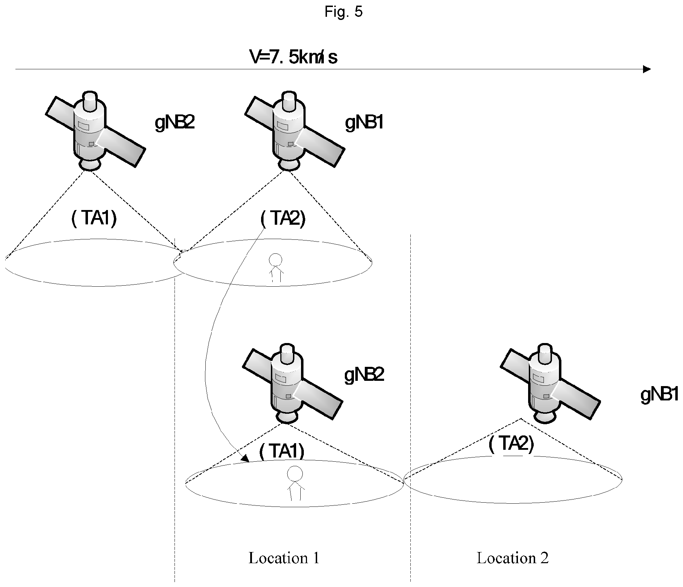

However, in the regenerative mode of a base station on a satellite, the base station moves at a high speed and thus cannot be bound to a geographical position on the ground, resulting in frequent changes in the TAI to which the user belongs. Taking Fig. 5 as an example, Fig. 5 is a schematic diagram of updating a tracking area of a base station, a base station gNB1 and a base station gNB2 are shown in the figure, the tracking area of the base station gNB1 is TA2, and the tracking area of the base station gNB2 is TA1. With the movement of the base station gNB1 and the base station gNB2, the base station serving a position 1 is updated from the gNB1 to the gNB2, in this way, a user at the position 1 is updated from the original tracking area TA2 to the tracking area TA1, so as to trigger TAU. If a large number of users at the position 1 trigger the TAU, a signaling storm is generated.

In addition, the UE registers with a certain base station, the base station has flown away from a service area of the user after a few minutes, such that a network faces the problem of being unable to page the user, and thus the solution cannot meet the requirements of the network anymore.

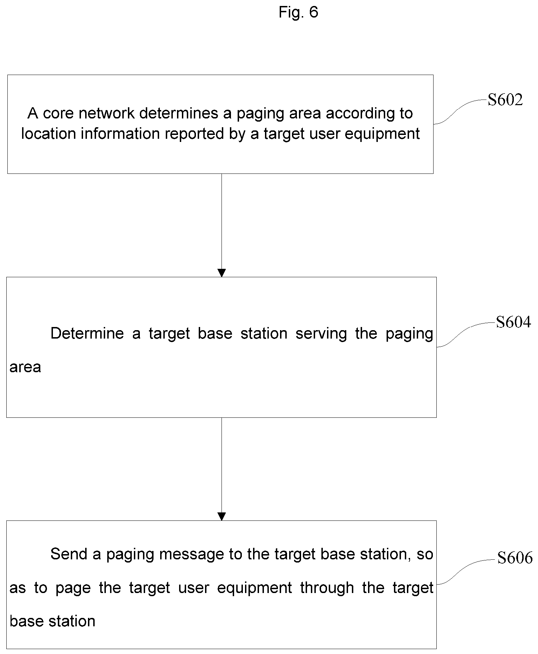

The present embodiment provides a paging method running on the non-terrestrial network in Fig. 1, which is applied to a core network. Fig. 6 is a flowchart of a paging method according to an embodiment of the present disclosure, and as shown in Fig. 6, the process includes the following steps:
Step S602, determining a paging area according to location information reported by a target user equipment; and
the location information refers to location information reported by the target user equipment, and may include a longitude and a latitude. Specifically, the core network may determine the paging area on the basis of the location information (the longitude and the latitude) registered and reported by the target user equipment in combination with a registration update threshold (DELTA).

For example, an area, of which the longitude and latitude in the location information reported by the user equipment are used as a circle center and the registration update threshold is used as a radius, is determined to be the paging area.

The target user equipment may report the location information to a base station. The base station to which the target user equipment registers and reports the location and the target base station are the same base station (no base station switching occurs after the registration of the target user equipment), and the base station to which the target user equipment registers and reports the position and the target base station may also be different base stations (base station switching occurs after the registration of the target user equipment).

It is assumed that the base station to which the target user equipment registers and reports the position and the target base station are the same base station, and both are the target base station. During the registration process of the target user equipment, the target user equipment sends a user position (including a longitude and a latitude) to the target base station, and the target base station converts the user position into a first tracking area code (TAC) and reports the first TAC to the core network.

Specifically, the target base station determining the first tracking area code according to the user position includes: determining first bits according to the latitudes of the user position; and determining second bits according to the longitudes of the user position, wherein the first tracking area code includes the first bits and the second bits. Determining the first tracking area code according to the user position further includes: determining a third bit according to the orientation of the user position, wherein the first tracking area code further includes the third bit.

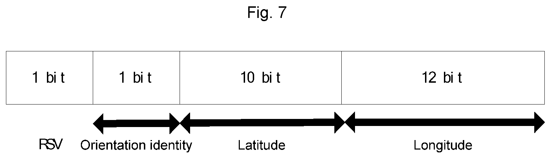

As shown in Fig. 7, it is a schematic diagram of a format of the first tracking area code, and original longitude and latitude information reported by the target user equipment and received by the target base station is (degreesLongitude-24bit, degreesLatitude-23bit). The base station converts the original longitude and latitude information and then fills the converted result into 3 bytes of the first tracking area code. As shown in Fig. 7, RSV is a reserved 1 bit, 1 bit of the orientation identity is the third bit, which represents the orientation, for example, east longitude, west longitude, south latitude, and north latitude. 10 bits of the latitude in Fig. 7 are the first bits, which are bits converted from the latitude of the user position, and 12 bits of the longitude are the second bits, which are bits converted from the longitude of the user position.

It is taken as an example for description below that the user position is north latitude 30 degrees and east longitude 121 degrees:
the latitude is converted into the first bits: (2^23*30)/90=2796202.67, the value of N is 2796202, which is 2AAAAA in the hexadecimal and is 01010101010101010101010 (23 bits) in the binary, and the north latitude is identified; and
the longitude is converted into the second bits: (2^24*121)/360 =5639008.71, the value of N is 5639008, which is 560B60 in the hexadecimal and is 010101100000101101100000 (24 bits) in the binary, and the east longitude is identified.

The east longitude and the north latitude are located in the first quadrant, 10 bits are 0101010101 (corresponding to the first bits) after low bits are removed from the north latitude, and 12 bits are 010101100000 (corresponding to the second bits) after low bits are removed from the east longitude, and are 155560 in the hexadecimal.

The base station fills the converted first bits, the second bits and the third bit into corresponding 3 bytes in Fig. 6. In a case where the 1 bit of the orientation identity is represented as a longitude, the east longitude or west longitude may be represented by 0 or 1 (assuming that 0 represents the east longitude and 1 represents the west longitude, if the east longitude is 121, the orientation identity corresponds to 0 ). In a case where the orientation identity 1 bit represents north and south latitudes, the south latitude or north latitude may be represented by 0 or 1 (assuming that 0 represents the south latitude and 1 represents the north latitude, if the north latitude is 30, the orientation identity corresponds to 1 in the above example).

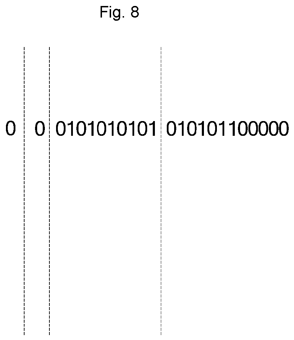

Fig. 8 is a diagram of a longitude and latitude encoding example, wherein from left to right, the first binary 0 is RSV (a reserved field), the second binary 0 is an orientation (corresponding to the third bit), 0101010101(10 bits, corresponding to the second bits and representing the latitude), and 010101100000 (12 bits, corresponding to the first bits and representing the longitude).

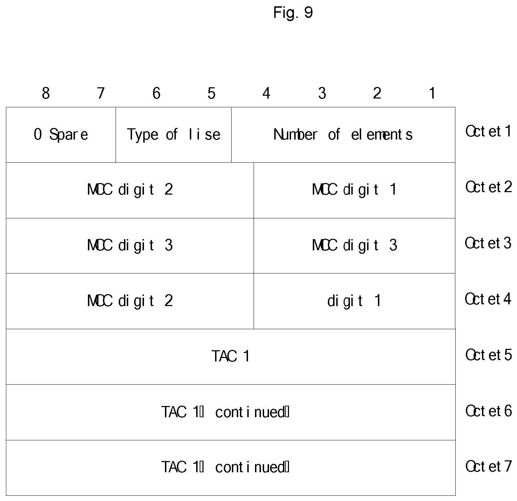

The base station reports the user position to the core network by means of the TAI, and Fig. 9 is a schematic diagram of a tracking area identity (TAI), which includes the following content: in a first byte (octet 1), 1 bit represents a vacancy (0 Spare), 2 bits represent a type of list, and 5 bits represent the number of elements; in a second byte (octet 2), 4 bits represent a mobile country code (MCC) digit 2, and 4 bits represent an MCC digit 1; in a third byte (octet 3), 4 bits represent a mobile network code (MNC) digit 3, and 4 bits represent an MCC digit 3; in a fourth byte (octet 4), 4 bits represent a mobile network code MNC digit 2, and 4 bits represent an MNC digit 1; a fifth byte (octet 5) is TAC1; a sixth byte (octet 6) is TAC1 (continued); and a seventh byte is TAC1 (continued).

In the present embodiment, the first tracking area code is filled in the fifth byte TAC1, the sixth byte TAC1 (continued) and the seventh byte TAC1 (continued) in the tracking area identity (TAI) shown in Fig. 9.

Step S504, determining a target base station serving the paging area; and
specifically, the target base station may be determined according to a beam position mapping table, wherein the beam position mapping table records beam position codes of beam positions which base stations serve at different moments.

One design method of satellite communication is to divide the earth surface into tens of thousands of beam positions according to the Godet polyhedron, and each base station may correspondingly serve several hundreds or thousands of beam positions therein. A moving trajectory of a base station on a satellite at each moment is recorded in an ephemeris table, and a beam position information table records beam positions which the base station on a satellite serves at various moments. An AMF of the core network acquires the ephemeris table and the beam position information table of an operation control system, so as to obtain the beam positions which the base stations serve at different moments, that is, the beam position mapping table, and the beam position mapping table records beam position codes which the base stations serve at different moments. The AMF searches for in real time and calculates a target base station S-gNB (one or more) serving the paging area, and beam position information of the paging area in combination with the beam position mapping table.

Step S506, sending a paging message to the target base station, so as to page the target user equipment through the target base station,
wherein the paging message carries a tracking area identity list (TAI List), which includes a third tracking area code, and the third tracking area code corresponds to a beam position code.

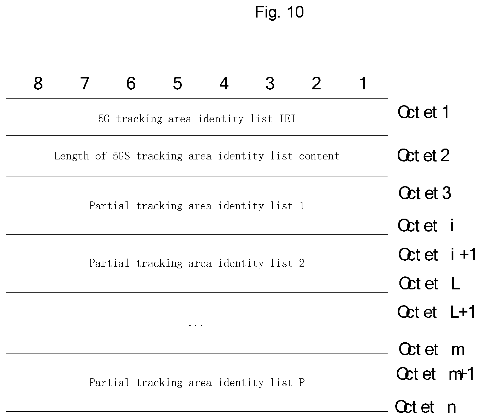

The beam position code multiplexes the format of a 5G TAI list, and Fig. 10 is a schematic diagram of a format of the tracking area identity list (TAI List), including: a 5G tracking area identity list IEI, Length of 5GS tracking area identity list content, Partial tracking area identity list 1, Partial tracking area identity list 2, ... Partial tracking area identity list p. Each partial tracking area identity list in the figure corresponds to one tracking area identity list.

The tracking area identity list includes a tracking area code identity shown in Fig. 9. In the present embodiment, the fifth byte TAC1, the sixth byte TAC1 (continued) and the seventh byte TAC1 (continued) shown in Fig. 9 are used for filling a beam position code, wherein the fifth byte TAC1, the sixth byte TAC1 (continued) and the seventh byte TAC1 (continued) are respectively 1 byte, the beam position code is first filled in the seventh byte TAC1 (continued), in a case where the number of bytes of the seventh byte TAC1 (continued) is insufficient, the beam position code is continued to be filled in the sixth byte TAC1 (continued) and the fifth byte TAC1. The fifth byte TAC1, the sixth byte TAC1 (continued) and the seventh byte TAC1 (continued) with the beam position code filled is the third tracking area code.

In an exemplary embodiment, the total byte length of the fifth byte TAC1, the sixth byte TAC1 (continued) and the seventh byte TAC1 (continued) is 24 bits. Therefore, each of the tens of thousands of beam positions worldwide is numbered according to digits, the numbering length does not exceed 24 bits to be conveniently converted into a TAC format for packaging. In this way, after receiving the paging message, the target base station may page the user equipment in the beam position corresponding to the beam position code.

By means of the above embodiments, a third tracking area code TAC is filled in each beam position, and each group of paging beam positions under the base station forms a TAI list, the target base station parses the TAI list to acquire beam position codes from the TAI list, so as to obtain the beam position code list. Since the beam position code list includes the code (the target beam position code) of the beam position where the target user equipment is located, when the target base station pages the beam position corresponding to each beam position code in the beam position code list, the effect of accurately paging the target user equipment can be achieved.

In an exemplary embodiment, the paging message further carries at least one of the following: an identity of the target user equipment, and at least one paging cycle. The core network sends the paging message to the target base station ,so as to the base station to page the target user equipment according to the paging cycle.

According to another embodiment of the present disclosure, a paging method is provided, which is applied to a target base station and includes: receiving a paging message from a core network; acquiring at least one beam position code from the paging message to obtain a beam position code list, wherein the beam position code list includes a target beam position code, and the target beam position code is a beam position code of a beam position where a target user equipment is located; and paging a user equipment in a beam position corresponding to each of the at least one beam position code in the beam position code list,
wherein the target base station is a base station serving a paging area, and the paging area is an area determined by the core network according to location information reported by the target user equipment.

In an exemplary embodiment, paging the user equipment in the beam position corresponding to each of the at least one beam position code in the beam position code list includes: paging the user equipment in the beam position corresponding to each of the beam position code in the beam position code list according to at least one paging cycle, wherein the paging message further carries at least one paging cycle.

By means of the above steps, the paging area is determined on the basis of the position of the target user equipment, and the target user equipment is paged by means of the target base station serving the paging area. The target base station serving the paging area where the target user equipment is located pages the target user equipment, thereby avoiding the situation in which a signaling storm may be caused by frequent trigger of TAU by the user equipment due to the movement of a satellite base station. In addition, since the beam position is paged on the basis of the beam position where the target user equipment is located, the effect of accurately paging the target user equipment can be achieved.

In the above embodiments, paging based on a user position achieved, and further, beam position paging based on a base station is achieved. A paging beam position is calculated and determined on the basis of an AMF of the core network and is issued to a base station on a satellite, so that the calculation of the beam position of a base station on a satellite can be effectively simplified, and satellite-borne computing power resources are saved on.

By means of the above embodiments, the base station converts the longitudes and latitudes of the target user equipment into the TAC format to be reported to the core network, thereby achieving accurate reporting of the position of the target user equipment by the base station, and the core network may determine, on the basis of the location information of the target user equipment, the beam position which the base station serves. In this way, the paging of the target user equipment by the base station can be realized, and the accuracy of paging the target user equipment by the base station is improved.

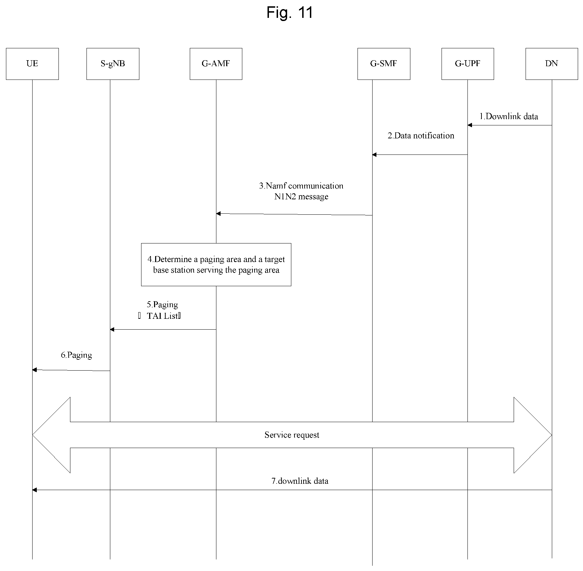

Fig. 11 is a flowchart of paging of a network side according to an embodiment of the present disclosure. The process includes the following interactive content:
1. a data network (DN) sends downlink data to a user plane function (G-UPF) in a 5G core network;
2. the G-UPF sends a data notification to a service management function (G-SMF) in the 5G core network;
3. the G-SMF transmits a Namf communication N1N2 message to an access and mobility management function (G-AMF) in the 5G core network;
4. the G-AMF determines a paging area, and determines a target base station S-gNB serving the paging area according to an ephemeris table and a beam position mapping table;
5. the G-AMF instructs the target base station S-gNB to initiate paging according to beam positions corresponding to beam position codes carried in a TAI list, and since the beam position codes carried in the TAI list include a beam position code where a target user equipment is located, the S-gNB initiates paging to the target user equipment (UE);
6. the target base station S-gNB pages the UE; after the target base station S-gNB pages the UE, a service request is established between the DN and the UE; and
7. the DN sends downlink data to the UE.

In the present disclosure, in view of the problem in which a network pages a user in a regenerative mode of a satellite, the network may be informed of location information (which may be accurate longitude and latitude location information and may also be blurred location information) of the user by means of a registration reporting solution based on a longitude and latitude position of the user, and the network initiates paging to a corresponding beam position covering the user on the basis of the location information reported by the user, so as to implement a paging service.

In the above embodiments, paging based on a user position is implemented, and further, beam position paging based on a base station is implemented. Since the base station often corresponds to hundreds of thousands of beam positions, compared with paging directly based on the base station, the user can be accurately paged, thereby saving precious link resources. The paging beam position is calculated and determined on the basis of the AMF of the core network and is issued to the base station on a satellite, so that the calculation of the beam position of the base station on a satellite is effectively simplified, and satellite-borne computing power resources are saved on.

By means of the descriptions of the above implementations, those skilled in the art may clearly understand that, the method according to the above embodiments may be implemented by software plus a necessary universal hardware platform, and of course may also be implemented by hardware, but the former is a better implementation in many cases. Based on such an understanding, the technical solutions of the present disclosure essentially or the part contributing to the prior art may be embodied in the form of a software product, and the computer software product is stored in a storage medium (e.g., an ROM/RAM, a magnetic disk and an optical disk), and includes several instructions for enabling a terminal equipment (which may be a mobile phone, a computer, a server, or a network equipment, and the like) to execute the method in various embodiments of the present disclosure.

The present embodiment further provides a paging system, including: a core network, configured to determine a paging area according to location information reported by a target user equipment, determine a target base station serving the paging area, and send a paging message to the target base station; and the target base station, configured to acquire at least one beam position code from the paging message to obtain a beam position code list, wherein the beam position code list includes a target beam position code, and the target beam position code is a beam position code of a beam position where the target user equipment is located; and page a user equipment in a beam position corresponding to each of the at least one beam position code in the beam position code list.

In an exemplary embodiment, the paging message carries a tracking area identity list, wherein the tracking area identity list includes at least one beam position code, and the target base station is configured to page a user equipment in a beam position corresponding to each of the at least one beam position code.

In an exemplary embodiment, the tracking area identity list includes at least one third tracking area code, and the at least one third tracking area code corresponds to the at least one beam position code.

In an exemplary embodiment, the paging message further carries at least one of the following: an identity of the target user equipment, and at least one paging cycle.

In an exemplary embodiment, the core network is further configured to determine the paging area according to the location information and a registration update threshold.

In an exemplary embodiment, the core network is further configured to determine an area, of which the location information is used as a circle center and the registration update threshold is used as a radius, to be the paging area.

In an exemplary embodiment, the core network is further configured to determine the target base station according to a beam position mapping table, wherein the beam position mapping table records beam position codes of beam position which base stations serve at different moments.

In an exemplary embodiment, the target base station is further configured to page a user equipment in a beam position corresponding to each of the at least one beam position code in the beam position code list according to at least one paging cycle, wherein the paging message further carries the at least one paging cycle.

It should be noted that the above modules may be implemented by software or hardware. For the latter, the modules may be implemented in the following manners, but are not limited thereto: the above modules are all located in the same processor; or the above modules are respectively located in different processors in the form of any combination.

An embodiment of the present disclosure further provides a computer-readable storage medium, wherein a computer program is stored in the computer-readable storage medium, and the computer program, when executed by a processor, implements the steps of the method in any of the above items.

In an exemplary embodiment, the computer-readable storage medium may include, but is not limited to, various media capable of storing the computer program, such as a USB flash disk, a read-only memory (ROM), a random access memory (RAM), a mobile hard disk drive, a magnetic disk, or an optical disk.

An embodiment of the present disclosure further provides an electronic device, including a memory and a processor, wherein a computer program is stored in the memory, and the processor is configured to run the computer program to execute the steps in any of the above method embodiments.

In an exemplary embodiment, the electronic device may further include a transmission equipment and an input/output equipment, wherein the transmission equipment is connected with the processor, and the input/output equipment is connected with the processor.

For specific examples in the present embodiment, reference may be made to the examples described in the above embodiments and exemplary implementations, and thus details are not described in the present embodiment again.

An embodiment of the present disclosure further provides a computer program product, including a computer program, wherein the computer program, when executed by a processor, implements the steps of the method in various embodiments of the present disclosure.

Obviously, it should be understood by those skilled in the art that, the modules or steps in the present disclosure may be implemented by a general-purpose computing device, may be concentrated on a single computing device or distributed on a network composed of a plurality of computing devices, and may also be implemented by program codes executable by the computing device, therefore the modules or steps may be stored in a storage device to be executed by the computing device, and in some cases, the shown or described steps may be executed in a sequence different from that herein, or the steps are respectively made into various integrated circuit modules, or a plurality of modules or steps therein may be made into a single integrated circuit module for implementation. In this way, the present disclosure are not limited to any particular hardware and software combination.

The above descriptions are only preferred embodiments of the present disclosure, and are not intended to limit the present disclosure. For those skilled in the art, the present disclosure may have various modifications and changes. Any modifications, equivalent replacements, improvements and the like, made within the spirit and principles of the present disclosure, shall all fall within the protection scope of the present disclosure.

## Claims

1. A paging method, which is applied to a core network, comprising:
determining a paging area according to location information reported by a target user equipment;
determining a target base station serving the paging area; and
sending a paging message to the target base station, so as to page the target user equipment through the target base station.

2. The method according to claim 1, wherein the paging message carries a tracking area identity list, the tracking area identity list comprises at least one beam position code, and the target base station is configured to page a user equipment in a beam position corresponding to each of the at least one beam position code.

3. The method according to claim 2, wherein the tracking area identity list comprises at least one third tracking area code, and the at least one third tracking area code corresponds to the at least one beam position code.

4. The method according to claim 2 or 3, wherein the paging message further carries at least one of the following: an identifier of the target user equipment, and at least one paging cycle.

5. The method according to any one of claims 1-4, wherein determining the paging area according to the location information reported by the target user equipment comprises:
determining the paging area according to the location information and a registration update threshold.

6. The method according to claim 5, wherein determining the paging area according to the location information and the registration update threshold comprises:
determining an area, of which the location information is used as a circle center and the registration update threshold is used as a radius, to be the paging area.

7. The method according to any of claims 1-6, wherein determining the target base station serving the paging area comprises:
determining the target base station according to a beam position mapping table, wherein the beam position mapping table records beam position codes of beam positions which base stations serve at different moments.

8. A paging method, which is applied to a target base station, comprising:
receiving a paging message from a core network;
acquiring at least one beam position code from the paging message to obtain a beam position code list, wherein the beam position code list comprises a target beam position code, and the target beam position code is a beam position code of a beam position where a target user equipment is located; and
paging a user equipment in a beam position corresponding to each of the at least one beam position code in the beam position code list;
wherein the target base station is a base station serving a paging area, and the paging area is an area determined by the core network according to location information reported by the target user equipment.

9. The method according to claim 8, wherein paging the user equipment in the beam position corresponding to each of the at least one beam position code in the beam position code list comprises:
paging the user equipment in the beam position corresponding to each of the beam position code in the beam position code list according to at least one paging cycle, wherein the paging message further carries the at least one paging cycle.

10. A paging system, comprising:
a core network, configured to determine a paging area according to location information reported by a target user equipment, determine a target base station serving the paging area, and send a paging message to the target base station; and
the target base station, configured to acquire at least one beam position code from the paging message to obtain a beam position code list, wherein the beam position code list includes a target beam position code, and the target beam position code is a beam position code of a beam position where the target user equipment is located; and page a user equipment in a beam position corresponding to each of the at least one beam position code in the beam position code list.

11. A computer-readable storage medium, wherein a computer program is stored in the computer-readable storage medium, and the computer program is configured to, when executed by a processor, to cause the processor to implement the steps of the method according to any one of claims 1-7 or 8-9.

12. An electronic device, comprising a memory and a processor, wherein a computer program is stored in the memory, and the processor is configured to run the computer program to execute the steps of the method according to any one of claims 1-7 or 8-9.

13. A computer program product, comprising a computer program, wherein the computer program is configured to, when executed by a processor, to cause the processor to implement the steps of the method according to any one of claims 1-7 or 8-9.
